# EUROPÄISCHE PATENTSCHRIFT

(11) **EP 1 432 537 B1**
(45) Veröffentlichungstag und Bekanntmachung des Hinweises auf die Patenterteilung: **06.04.2005**
(21) Anmeldenummer: 02774689.0
(22) Anmeldetag: 07.10.2002
(51) Int. Cl.: B21B 38/06, G01L 5/04

(54) **VORRICHTUNG ZUM ERFASSEN DER SPANNUNGSVERTEILUNG VON DURCH BANDZUG BELASTETEN METALLBÄNDERN**
DEVICE FOR DETECTING THE STRESS DISTRIBUTION OF METAL STRIPS STRESSED BY TENSION OF THE STRIP
DISPOSITIF POUR DETERMINER LA DISTRIBUTION DES TENSIONS DANS DES BANDES METALLIQUES SOLLICITEES PAR UNE TRACTION DE BANDE

(30) Priorität: 05.10.2001 DE 10149240; 22.01.2002 DE 10202413
(43) Veröffentlichungstag der Anmeldung: 30.06.2004
(73) Patentinhaber: Sundwig GmbH, 58675 Hemer-Iserlohn (DE)
(72) Erfinder: BERGER, Axel, 41564 Kaarst (DE); BERGER, Frank, 32609 Hüllhorst (DE)
(74) Vertreter: Cohausz & Florack
(86) Internationale Anmeldenummer: PCT/EP2002/011205
(87) Internationale Veröffentlichungsnummer: WO 2003/031090

(56) Entgegenhaltungen:
- EP-A- 0 595 072
- DE-A- 2 630 410
- DE-A- 4 135 614
- DE-A- 19 838 457

## Beschreibung

Die Erfindung betrifft eine Vorrichtung zum Erfassen der Spannungsverteilung von durch Bandzug belasteten Metallbändern nach dem Oberbegriff von Anspruch 1 (siehe z. B. EP-A 0595072). Derartige Vorrichtungen werden beispielsweise eingesetzt, um die beim Kaltwalzen im jeweils verarbeiteten Band auftretenden Belastungen zu messen und daraus Steuersignale für Einrichtungen abzuleiten, welche die Verteilung der auf das Band wirkenden Zugkräfte regeln.

Um die Messung der Spannungsverteilung durchführen zu können, wird das Metallband um die Meßrolle geführt. Die Messung erfolgt dann durch in der Rolle befindliche Kraft-Meßsensoren, mit denen das Band abgetastet wird. Die auf die Meßrolle wirkenden Bandumlenkkräfte führen in der Meßrolle zu Biegespannungen, die eine Verformung des Querschnitts der Meßrolle bewirken.

Ein grundsätzliches Problem bei einer derartigen Erfassung der Spannungsverteilung besteht in der Gefahr einer Beschädigung der Sensoren und darin, daß es zu Verschmutzungen der Meßsensoren kommt. Daher ist seit jeher versucht worden, die Meßserisoren so gegenüber Umgebung abzuschirmen, daß einerseits eine optimale Meßgenauigkeit erreicht und andererseits eine Zerstörung der Sensoren oder eine das Meßergebnis negativ beeinflussende Verschmutzung der Meßsensoren verhindert wird.

Ein Versuch dieser Art ist aus der DE 26 30 410 A1 bekannt. Bei dieser Meßrolle sind die Meßsenoren in in die Meßrolle eingeformten Aufnahmen eingesetzt. Zum Schutz der Meßsensoren ist die Meßrolle mit einem aufgeschrumpften Stahlmantel überzogen.

In ähnlicher Weise ist in der DE 198 38 457 A1 vorgeschlagen worden, den Meßrollenkörper mit einer durch ein dünnes Metallrohr gebildeten Ummantelung zu umgeben. Dabei sitzt das für das für die Übertragung der im Betrieb wirkenden Kräfte eingesetzte Kraftübertragungselement mit einem Untermaß in einer zylindrisch geformten Aufnahme auf dem die Kräfte aufnehmenden Sensor, der auf dem Grund der Aufnahme angeordnet ist. Die zwischen dem Kraftübertragungselement und der Innenwand der Aufnahme vorhandene Fuge ist mittels einer Dichtmasse geschlossen, so daß das Kraftübertragungselement spielfrei in der Aufnahme gehalten ist.

Der Vorteil von mit einer Ummantelung umgebenden Meßrollen besteht darin, daß die Eigenschaften des Ummantelungsmaterials optimal an die Eigenschaften des zu walzenden Blechs angepaßt werden können. Beschädigungen der Blechoberfläche können so weitestgehend vermieden werden. Gleichzeitig schützt die Ummantelung die Meßeinrichtung vor Verschmutzung. In der Praxis muß dazu allerdings in Kauf genommen werden, daß es dann, wenn die Ummantelung eine größere Wandstärke aufweist, zu einer beträchtlichen Verfälschung des Meßergebnisses kommt . So ist festgestellt worden, daß schon bei Ummantelungen mit einer Dicke von 2 mm große Kraftnebenschlüsse entstehen, die das Meßergebnis deutlich verfälschen.

Ausgehend von dem voranstehend erläuterten Stand der Technik bestand die Aufgabe der Erfindung darin, eine Vorrichtung zu schaffen, mit der sich die in einem Metallband auftretenden Spannungen sicher und bei minimierter Gefahr von störenden Einflüssen erfassen lassen.

Diese Aufgabe wird durch eine Vorrichtung zum Erfassen der Spannungsverteilung von durch Bandzug belasteten Metallbändern die mit einer Meßrolle, mit mindestens einer in den Meßrollenkörper der Meßrolle eingeformten Aufnahme, mit einem Meßsensor, der in der Aufnahme sitzt, mit einem in der Aufnahme steckenden Kraftübertragungselement, welches einen auf den Meßsensor wirkenden Belastungsabsatz aufweist, dessen Querschnittsfläche kleiner als die Querschnittsfläche der Aufnahme ist, und mit einer in der Öffnung der Aufnahme sitzenden Abdeckung, deren nach außen weisende Oberfläche im wesentlichen flächenbündig zur Umfangsfläche des Meßrollenkörpers angeordnet ist.

Bei einer erfindungsgemäßen Vorrichtung ist ein Kraftübertragungselement vorgesehen, dessen Durchmesser derart bemessen ist, daß es mit Spiel in der Aufnahme sitzt. Über den Belastungsabsatz des Kraftübertragungselements erfolgt die Belastung des Meßsensors. Die Einleitung der im Betrieb von der Meßrolle aufgenommenen Kräfte in das Kraftübertragungselement erfolgt durch die auf dem Kraftübertragungselement abgestützte Abdeckung, welche die Öffnung der Aufnahme bis auf eine Fuge von geringer Breite, vorzugsweise jedoch fugenfrei, abdichtet. Abdeckung und Kraftübertragungselement sind dabei durch einen Preßsitz miteinander verbunden. Gleichzeitig ist das Kraftübertragungselement in geeigneter Weise mit der Meßrolle verbunden. Auf diese Weise ist sichergestellt, daß die auf die Abdeckung wirkenden Kräfte richtig und ohne Verfälschungen durch äußere Einflüsse auf den Meßsensor übertragen und von diesem als exaktes Abbild der tatsächlichen Belastungen an eine Meß- und Regeleinrichtung geliefert werden.

Wie beim eingangs erläuterten Stand der Technik kann bei einer erfindungsgemäßen Vorrichtung der Meßrollenkörper der Meßrolle mit einer vorzugsweise aus einem hinsichtlich der Schonung der Oberfläche des Bandes optimierten Kunststoff bestehenden Ummantelung umgeben sein, welche den in einer Aufnahme der Meßrolle sitzenden Meßsensor gegen äußere Einflüsse schützt. Die erfindungsgemäße Ausgestaltung des Kraftübertragungselements und seine durch Preßsitz verwirklichte Verbindung mit der Abdeckung ermöglichen es dabei, die Vorteile einer mit einer Ummantelung versehenen Meßrolle ohne die beim Stand der Technik bestehende Gefahr einer Verfälschung des Meßergebnisses zu nutzen.

Die Abdeckung selbst kann in die Öffnung der Aufnahme ebenfalls eingepreßt sein, so daß unabhängig vom Vorhandensein einer Ummantelung eine dauerhaft sichere Abdichtung der Aufnahme bei gleichzeitig im wesentlichen fugenlosem Übergang zwischen der Umfangsfläche der Meßrolle und der Abdeckung gewährleistet ist. Auf diese weise wird einerseits sicher verhindert, daß sich lose Partikel im Bereich der Abdeckung festsetzen, die das Meßergebnis verfälschen könnten. Andererseits ist durch den Preßsitz sichergestellt, daß die Oberfläche des jeweils verarbeiteten Bandes nicht durch Ansammlungen von Schmutzpartikeln auf der Umfangsfläche der Meßrolle beschädigt wird.

Das Einpressen der Abdeckung in die Aufnahme kann in konventioneller Weise dadurch erfolgen, daß die Abdeckung in die Aufnahme eingeschrumpft wird. Alternativ können auch Formelemente, wie Keilschrägen oder ähnliches, vorgesehen werden, um ein mechanisch unterstütztes Einpressen der Abdeckung in die Aufnahme zu erleichtern. Die auf die Abdeckung wirkende Pressung verursacht eine Kraft, durch die der Meßsensor auch im Ruhezustand definiert vorgespannt ist. Daher ist es zweckmäßig, die während des Einpressens der Abdeckung auftretenden Kräfte über den Meßsensor zu erfassen, um so eine eindeutige Aussage über den tatsächlichen Belastungszustand des Sensors im fertig montierten Zustand zu erhalten.

Sitzt die Abdeckung nicht fugenlos in der Öffnung der Aufnahme, so sollte die vorhandene Fuge mittels einer geeigneten Dichtungsmasse abgedichtet werden, um ein Eindringen von unter die Ummantelung gelangendem Schmutz, wie Kriechöle etc., in die Aufnahme zu vermeiden.

Eine in bestimmten Einsatzfällen erfindungsgemäßer Meßrollen besonders vorteilhafte Ausgestaltung der Erfindung besteht dabei darin, daß die Abdeckung jeweils über einen Stützabschnitt auf dem Kraftübertragungselement abgestützt ist, dessen Querschnittsfläche kleiner ist als die Querschnittsfläche des Kraftübertragungselements im Bereich des Belastungsabsatzes, über den die Belastung des Meßsensors erfolgt. Bei Ausbildung eines solchen Stützabsatzes zwischen der Abdeckung und dem Kraftübertragungselement ist sichergestellt, daß die auf die Abdeckung wirkenden Kräfte konzentriert in das Kraftübertragungselement eingeleitet und von diesem auf den Meßsensor übertragen werden. Dies ermöglicht es, den Meßsensor, die Gestalt des Kraftübertragungselements und die Form der Abdeckung so aufeinander abzustimmen, daß ein stets optimal exaktes Meßergebnis erreicht wird.

Gemäß einer weiteren Ausgestaltung der Erfindung ist der Meßsensor ringförmig ausgebildet. Mit einem derart ringförmigen Meßsensor lassen sich die im Betrieb der Meßrolle auftretenden Belastungen besonders sicher erfassen.

Dies gilt insbesondere dann, wenn das Kraftübertragungselement einen Schaftabschnitt aufweist, dessen eines Ende fest mit der Meßrolle verbunden ist. Die den Spannungen im um die Meßrolle geführten Band entsprechenden Belastungen der Meßrolle lassen sich so besonders eindeutig erfassen.

Vorzugsweise ist der Belastungsabsatz als um den Schaftabschnitt umlaufender Kragen ausgebildet, so daß der Meßsensor und das Kraftübertragungselement koaxial zueinander angeordnet sein können und der Belastungsabsatz mit seiner von der Außenseite der Meßrolle abgewandten Unterseite auf den Meßsensor wirken kann. Bei dieser Gestaltung und Anordnung des Meßsensors und des Kraftübertragungselements ist sichergestellt, daß die im Betriebe der Meßrolle auftretenden Belastungen hinsichtlich ihrer Wirkrichtung und Verteilung von dem Meßsensor richtig erfaßt werden.

In der Regel ist es für eine einwandfreie Erfassung der Meßsignale erforderlich, das aus Abdeckung, Kraftübertragungselement und Meßsensor gebildete Meßsystem vorzuspannen. Durch die Tiefe, über die das Kraftübertragungselement in die Aufnahme eingeführt wird, läßt sich die Kraft exakt einstellen, mit der der Meßsensor vorgespannt wird.

Die erfindungsgemäß mehrteilige Ausführung der aus der Abdeckung und dem Kraftübertragungselement gebildeten, zur Übertragung der auftretenden Kräfte dienenden Baugruppe hat den Vorteil, daß sich für die Herstellung der Abdeckung und des Kraftübertragungselementes unterschiedliche Werkstoffe verwenden lassen. So kann die Abdeckung aus einem besonders verschleißfesten Material gefertigt werden, während ein an dem Kraftübertragungselement, zum Anschluß an die Meßrolle ausgebildeter Schaft aus einem zähen Werkstoff bestehen kann, der besonders gut in der Lage ist, die im Betrieb der Meßrolle auftretenden Belastungen aufzunehmen.

Der besondere Vorteil der erfindungsgemäßen Ausgestaltung einer Meßvorrichtung besteht somit darin, daß in einem ersten Arbeitsgang der Belastungsabsatz mit einem gegebenenfalls an ihm ausgebildeten oder mit ihm verbundenen Schaft in der Aufnahme der Meßrolle vormontiert und justiert werden kann. Anschließend wird dann die Abdeckung mit dem Belastungsabsatz verpreßt, wobei sie, sofern dies vorgesehen ist, gleichzeitig in die Öffnung der Aufnahme eingepreßt wird. Auf diese Weise kann die Lage des Belastungsabsatzes im Hinblick auf ein optimales Meßergebnis exakt ausgerichtet werden, ohne daß es dabei zu Behinderungen durch die Abdeckung kommt.

Die einwandfreie Erfassung der die Spannungsverteilung im untersuchten Band wiederspiegelnden Kräfte der Meßrolle kann zudem dadurch unterstützt werden, daß die Abdeckung und / oder das Kraftübertragungselement Formelemente aufweist, welche eine gerichtete Einleitung von auf die Abdeckung wirkenden Kräften auf das Kraftübertraguhgselement bewirken. Diese Formelemente können beispielsweise als Kerben, Einsenkungen, Nuten oder ähnliches ausgebildet sein, welche eine gezielte Schwächung des Kraftübertragungselements und / oder der Abdeckung bewirken und eine dementsprechend bevorzugte Verförmungsrichtung der Kraftübertragung festlegen.

In anderen Fällen, bei denen wegen der in der Ummantelung begründeten Besonderheiten der Verformung einer erfindungsgemäßen Vorrichtung nicht zweckmäßig ist, die von der Abdeckung aufgenommenen Kräfte konzentriert in den Meßsensor einzuleiten, sollte jedoch auf den voranstehend erläuterten Stützabschnitt verzichtet werden und die Preßverbindung zwischen der Abdeckung und dem Kraftübertragungselement so ausgebildet werden, daß die Abdeckung flächig auf der ihr zugeordneten Oberseite des Kraftübertragungselements aufliegt.

Weitere vorteilhafte Ausgestaltungen der Erfindung sind in den abhängigen Ansprüchen angegeben und werden nachfolgend anhand einer Ausführungsbeispiele darstellenden Zeichnung näher erläutert. Es zeigen schematisch:
- Fig. 1: eine erste Meßrolle im Querschnitt,
- Fig. 2: eine zweite Meßrolle im Querschnitt,
- Fig. 3: eine dritte Meßrolle im Querschnitt,
- Fig. 4: eine vierte Meßrolle im Querschnitt.

Die in den Figuren dargestellten Meßrollen A bis D werden typischerweise in Kaltwalzwerken eingesetzt. Das hier nicht gezeigte, in dem Kaltwalzwerk verarbeitete Stahlband wird dazu über die Umfangsfläche der Meßrollen A, B, C, D umgelenkt.

Die aus einem Stahl gefertigten Meßrollenkörper 1 der Meßrollen A bis D weisen jeweils mindestens eine im Querschnitt kreisförmige, sacklochartig ausgebildete Aufnahme 2 auf, in deren Boden 3 zusätzlich jeweils eine angrenzend an ihren Grund mit einem Innengewinde versehene und koaxial zur Längsachse L der Aufnahme 2 ausgerichtete Bohrung 4 eingeformt ist.

In die Bohrung 4 ist ein Schaft 5a mit einem an seinem einen Ende ausgebildeten Gewindeabschnitt eingeschraubt. An seinem der Öffnung der Aufnahme 2 zugeordneten anderen Ende trägt der Schaft 5a einen Belastungsabsatz 5b, der als um den Schaft 5a umlaufender Kragen ausgebildet ist. Der Durchmesser Db des Belastungsabsatzes 5b ist dabei kleiner als der Innendurchmesser Di der Aufnahme 2.

Der Schaft 5a und der von ihm getragene Belastungsabsatz 5b bilden gemeinsam ein Kraftübertragungselement 5, über das ein ringförmig ausgebildeter, koaxial zur Längsachse L angeordneter Meßsensor 6 belastet wird. Der Meßsensor 6 ist dazu zwischen dem Belastungsabsatz 5b und dem Boden 3 der Aufnahme 2 derart eingespannt, daß der Belastungsabsatz 5b mit seiner von der Öffnung der Aufnahme 2 abgewandten Unterseite auf den Meßsensor 6 wirkt.

In der Oberseite des Kraftübertragungselements 5 ist eine Einsenkung 5d eingeformt. In die Einsenkung 5d ist ein an der Unterseite einer Abdeckung 7 ausgebildeter und gegenüber dieser vorstehender Absatz 7a eingepreßt. Auf diese Weise ist die Abdeckung 7 mit dem Kraftübertragungselement 5 fest verbunden.

Die Abdeckung 7 ist kreisrund ausgebildet und koaxial zur Längsachse L ausgerichtet. Ihr Durchmesser ist dabei so bemessen, daß sie die Öffnung der Aufnahme 2 im wesentlichen vollständig ausfüllt.

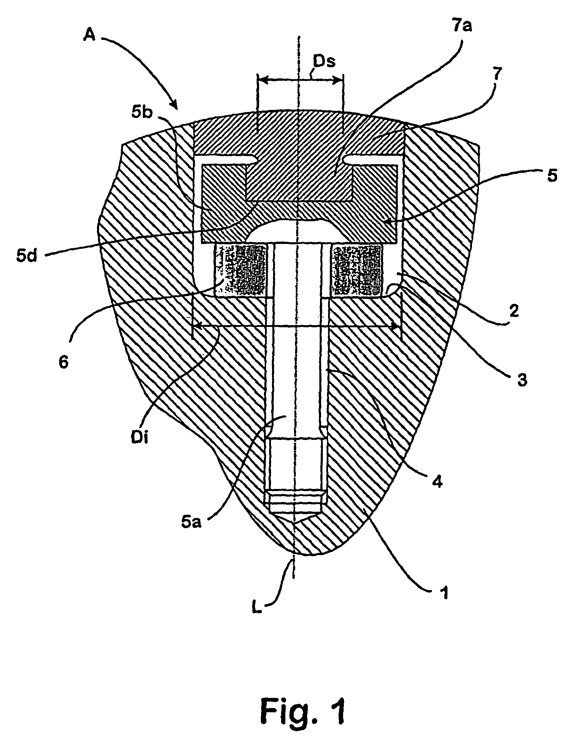

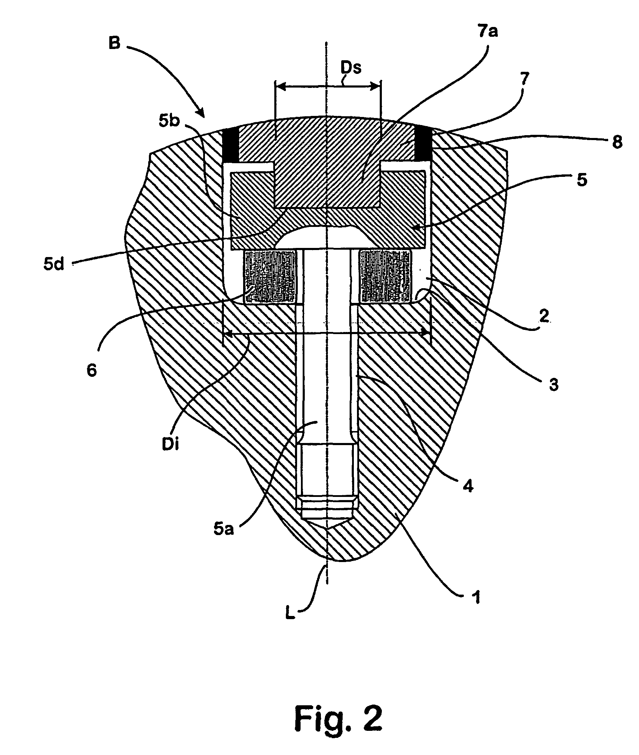

Der Verlauf der Außenfläche 7a der Abdeckung 7 ist an den Verlauf der Umfangsfläche des jeweiligen Meßrollenkörpers 1 angepaßt, so daß die Abdeckung 7 flächenbündig in die Aufnahme 2 eingepaßt ist. Die Anpassung der Abdeckung 7 an den Verlauf der Umfangsfläche 1 kann durch eine entsprechende Formgebung schon bei der Herstellung der Abdeckung 7 vorbereitet und nach erfolgter Montage der Abdeckung 7 durch eine spanabhebende Bearbeitung vollendet werden. Bei den Meßrollen A,B (Figuren 1,2) weist der Absatz 7a eine Länge auf, die größer ist als die Tiefe der Einsenkung 5d. Auf diese Weise bildet der Absatz 7a einen Stützabsatz, dessen Durchmesser Ds kleiner ist als der Durchmesser Db des Belastungsabsatzes 5b. Der Absatz 7a besitzt daher eine kleinere Querschnittsfläche als der Belastungsabsatz 5b. Auf diese Weise werden die von der Abdeckung 7 aufgenommenen Kräfte konzentriert in das Kraftübertragungselement 5 und von dort auf den Meßsensor 6 übertragen.

Stellt sich heraus, daß es infolge des Vorhandenseins eines Stützabsatzes aufgrund des Zusammenspiels von Ummantelung 9 und Abdeckung 7 zu übermäßigen, das Meßergebnis verfälschenden Verformungen im Bereich des Randes der Abdeckung 7 kommt, so kann dem dadurch begegnet werden, daß die Abdeckung 7 großflächiger auf der Oberseite des Kraftübertragungselements 5 abgestützt wird. Um dies zu ermöglichen, ist bei den Meßrolle C,D die Länge des Absatzes 7a der Abdeckung 7 kleiner als die Tiefe der Einsenkung 5d, so daß die Abdeckung 7 mit ihrer Unterseite flächig auf der Oberseite des Kraftübertragungselements 5 aufliegt.

Beim in Fig. 1 dargestellten Ausführungsbeispiel ist die Abdeckung 7 in die Öffnung der Aufnahme 2 eingepreßt. Auf diese Weise ist die Aufnahme 2 gegenüber der Umgebung der Meßrolle A fugenlos dicht verschlossen. Die Einpreßkraft ist dabei so gewählt, daß einerseits ein dauerhaft fester Sitz der Abdeckung 7 gewährleistet und andererseits ein Eindringen von Schmutz in die Aufnahme 2 sicher vermieden wird.

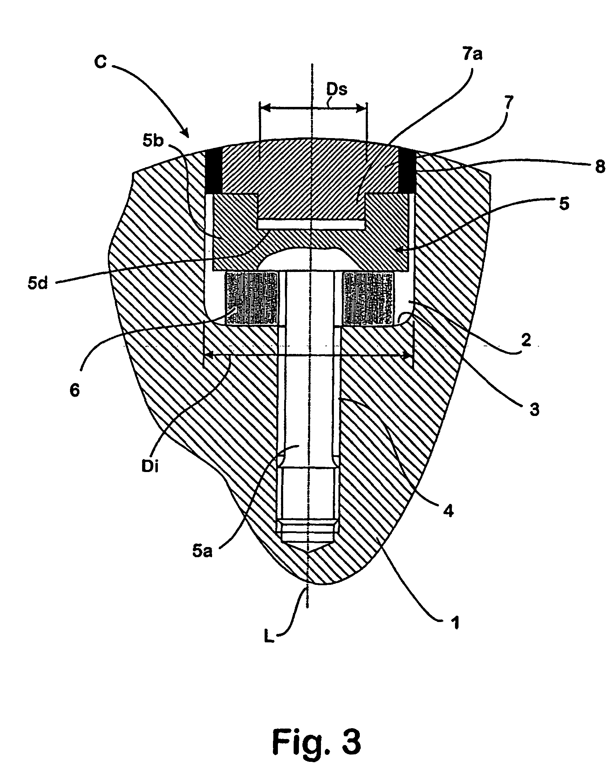

Bei dem in den Figuren 2 bis 3 dargestellten Ausführungsbeispiel sitzt die Abdeckung 7 mit Spiel in der Öffnung der Aufnahme 2. Die zwischen dem Innenrand der Öffnung der Aufnahme 2 und dem Außenrand der Abdeckung 7 verbleibende Fuge ist durch eine Dichtungsmasse 8 verschlossen.

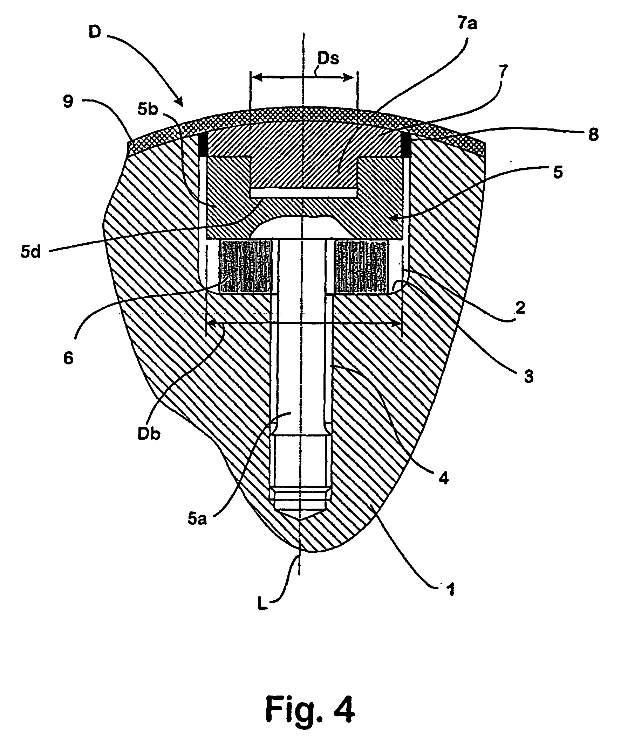

Der Meßrollenkörper 1 der in Fig. 4 dargestellten Meßrolle D ist von einer Ummantelung 9 umgeben, die aus einem Kunststoff besteht, der weicher ist als der Stahl, aus dem die Meßrollenkörper 1 der Meßrollen A, B jeweils hergestellt sind. Die Dicke der Ummantelung ist dabei so bemessen, daß die in der Praxis an das Abschliffmaß gestellten Anforderungen (Abschliffmaß ≥ 2 bis 3 mm) sicher erfüllt werden.

### BEZUGSZEICHEN

- A, B: Meßrollen
- L: Längsachse der Aufnahme 2
- Db: Durchmesser des Belastungsabsatzes 5b
- Di: Innendurchmesser der Aufnahme 2
- Ds: Durchmesser des Absatzes 7a

- 1: Meßrollenkörper
- 2: Aufnahme
- 3: Boden der Aufnahme 2
- 4: Bohrung
- 5: Kraftübertagungselement
- 5a: Schaft
- 5b: Belastungsabsatz
- 5d: Einsenkung
- 6: Meßsensor
- 7: Abdeckung
- 7a: (Stütz-)Absatz der Abdeckung 7
- 8: Dichtungsmasse
- 9: Ummantelung

## Patentansprüche

1. Vorrichtung zum Erfassen der Spannungsverteilung von durch Bandzug belasteten Metallbändern
- mit einer Meßrolle (A,B),
- mit mindestens einer in den Meßrollenkörper (1) der Meßrolle (A,B) eingeformten Aufnahme (2),
- mit einem Meßsensor (6), der in der Aufnahme (2) sitzt,
- mit einer in der Öffnung der Aufnahme (2) sitzenden Abdeckung (7), deren nach außen weisende Oberfläche im wesentlichen flächenbündig zur Umfangsfläche des Meßrollenkörpers (1) der Meßrolle (A,B) angeordnet ist, **gekennzeichnet durch** :
ein in der Aufnahme (2) steckendes Kraftübertragungselement (5), welches einen auf den Meßsensor (6) wirkenden Belastungsabsatz (5b) aufweist, dessen Querschnittsfläche kleiner als die Querschnittsfläche der Aufnahme (2) ist, wobei das Kraftübertragungselemen mit der Abdeckung mittels einer Preßverbindung verbunden ist.

2. Vorrichtung nach Anspruch 1, **dadurch gekennzeichnet, daß** der Meßrollenkörper von einer Ummantelung (9) umgeben ist, welche die Abdeckung (7) vollständig abdeckt.

3. Vorrichtung nach einem der voranstehenden Ansprüche, **dadurch gekennzeichnet, daß** die Abdeckung (7) fest in der Öffnung der Aufnahme (2) sitzt.

4. Vorrichtung nach einem der voranstehenden Ansprüche, **dadurch gekennzeichnet, daß** das Kraftübertragungselement (5) auf seiner der Außenseite der Meßrolle (A,B) zugeordneten Seite eine Einsenkung (5d) aufweist, in die ein an der dem Kraftübertragungselement (5) zugeordneten Fläche der Abdeckung (7) ausgebildeter Absatz (7a) eingepreßt ist.

5. Vorrichtung nach einem der voranstehenden Ansprüche, **dadurch gekennzeichnet, daß** die Abdeckung (7) in die Öffnung der Aufnahme (2) eingepreßt ist und diese vollständig abdichtet.

6. Vorrichtung nach einem der Ansprüche 1 bis 3, **dadurch gekennzeichnet, daß** eine zwischen dem Rand der Abdeckung (7) und der Öffnung der Aufnahme (2) verbleibende Fuge mit einer Dichtungsmasse (8) abgedichtet ist.

7. Vorrichtung nach einem der voranstehenden Ansprüche, **dadurch gekennzeichnet, daß** die Abdeckung (7) auf der ihr zugeordneten Oberfläche des Kraftübertragungselements (5) aufliegt.

8. Vorrichtung nach einem der Ansprüche 1 bis 6, **dadurch gekennzeichnet, daß** zwischen der Abdeckung (7) und dem Kraftübertragungselement (5) ein Stützabsatz ausgebildet ist, der eine geringere Querschnittsfläche als der Belastungsabsatz (5b) des Kraftübertragungselements (5) besitzt.

9. Vorrichtung nach einem der voranstehenden Ansprüche, **dadurch gekennzeichnet, daß** das Kraftübertragungselement (5) mit seinem einen Ende fest mit der Meßrolle (A,B) verbunden ist und an seinem anderen Ende den Belastungsabsatz (5b) aufweist.

10. Vorrichtung nach einem der voranstehenden Ansprüche, **dadurch gekennzeichnet, daß** der Meßsensor (6) ringförmig ausgebildet ist.

11. Vorrichtung nach einem der voranstehenden Ansprüche, **dadurch gekennzeichnet, daß** das Kraftübertragungselement (5) einen Schaftabschnitt (5a) aufweist, dessen eines Ende fest mit der Meßrolle (A) verbunden ist.

12. Vorrichtung nach Anspruch 11, **dadurch gekennzeichnet, daß** der Belastungsabsatz (5b) als um den Schaftabschnitt (5a) umlaufender Kragen ausgebildet ist.

13. Vorrichtung nach den Ansprüchen 10 bis 12, **dadurch gekennzeichnet, daß** der Meßsensor (6) und das Kraftübertragungselement (5) koaxial angeordnet sind und der Belastungsabsatz (5b) mit seiner von der Außenseite der Meßrolle (A,B) abgewandten Unterseite auf den Meßsensor (6) wirkt.

14. Vorrichtung nach einem der voranstehenden Ansprüche, **dadurch gekennzeichnet, daß** die feste Verbindung zwischen dem Kraftübertragungselement (5) und der Meßrolle (A,B) durch eine Schraubverbindung gebildet ist.

15. Vorrichtung nach einem der voranstehenden Ansprüche, **dadurch gekennzeichnet, daß** das Kraftübertragungselement (5) mindestens einen Abschnitt (5b) aufweist, der aus einem anderen Material besteht als der an ihn angrenzende Abschnitt des Kraftübertragungselements (5a).

16. Vorrichtung nach einem der voranstehenden Ansprüche, **dadurch gekennzeichnet, daß** die Abdeckung (7) aus einem Werkstoff besteht, dessen Eigenschaften sich von den Eigenschaften des Werkstoffs unterscheiden, aus dem der Schaft des Kraftübertragungselements (5) gefertigt ist.

17. Vorrichtung nach einem der voranstehenden Ansprüche, **dadurch gekennzeichnet, daß** die Aufnahme (2) einen kreisförmigen Querschnitt besitzt.

## Claims

1. A device for detecting the stress distribution of metal strips stressed by tension of the strip
- comprising a measuring roller (A, B),
- comprising at least one receptacle (2) formed in the measuring roller body (1) of the measuring roller (A, B),
- comprising a measuring sensor (6) which sits in the receptacle (2),
- comprising a cover (7) sitting in the opening of the receptacle (2) said cover's outwardly directed surface is arranged substantially flush to the circumferential surface of the measuring roller body (1) of the measuring roller (A, B)
**characterised by**:
- a force-transmitting element (5) fitted in the receptacle (2), which has a loading shoulder (5b) acting on the measuring sensor (6), said loading shoulder's (5b)cross-sectional area is smaller than the cross-sectional area of the receptacle (2), wherein the force-transmitting element is connected to the cover by means of a press connection.

2. The device according to claim 1, **characterised in that** the measuring roller body is surrounded by a jacket (9) which completely covers the cover (7).

3. The device according to any one of the preceding claims, **characterised in that** the cover (7) sits tightly in the opening of the receptacle (2).

4. The device according to any one of the preceding claims, **characterised in that** the force-transmitting element (5) has a depression (5d) on its side associated with the outside of the measuring roller (A, B) into which depression (5d) a shoulder (7a) formed on the surface of the cover (7) associated with the force-transmitting element (5) is pressed.

5. The device according to any one of the preceding claims, **characterised in that** the cover (7) is pressed into the opening of the receptacle (2) and seals this completely.

6. The device according to any one of claims 1 to 3, **characterised in that** a joint remaining between the edge of the cover (7) and the opening of the receptacle (2) is sealed with a sealing compound (8).

7. The device according to any one of the preceding claims, **characterised in that** the cover (7) rests on the surface of the force-transmitting element (5) allocated to it.

8. The device according to any one of claims 1 to 6, **characterised in that** between the cover (7) and the force-transmitting element (5) there is formed a supporting shoulder which has a smaller cross-sectional area than the loading shoulder (5b) of the force-transmitting element (5).

9. The device according to any one of the preceding claims, **characterised in that** the force-transmitting element (5) has one end fixedly connected to the measuring roller (A, B) and has the loading shoulder (5b) at its other end.

10. The device according to any one of the preceding claims, **characterised in that** the measuring sensor (6) is constructed as ring-shaped.

11. The device according to any one of the preceding claims, **characterised in that** the force-transmitting element (5) has a shaft section (5a) whose one end is fixedly connected to the measuring roller (A).

12. The device according to claim 11, **characterised in that** the loading shoulder (5b) is constructed as a collar which encircles the shaft section (5a).

13. The device according to claims 10 to 12, **characterised in that** the measuring sensor (6) and the force-transmitting element (5) are arranged coaxially and the loading shoulder (5b) acts on the measuring sensor (6) with its lower side facing away from the outside of the measuring roller (A, B).

14. The device according to any one of the preceding claims, **characterised in that** the fixed connection between the force-transmitting element (5) and the measuring roller (A, B) is formed by a screw connection.

15. The device according to any one of the preceding claims, **characterised in that** the force-transmitting element (5) has at least one section (5b) which consists of a different material than the section of the force-transmitting element (5a) adjacent to it.

16. The device according to any one of the preceding claims, **characterised in that** the cover (7) consists of a material whose properties differ from the properties of the material from which the shaft of the force-transmitting element (5) is made.

17. The device according to any one of the preceding claims, **characterised in that** the receptacle (2) has a circular cross-section.

## Revendications

1. Dispositif pour détecter la distribution des tensions de bandes métalliques sollicitées par traction de bande
- avec un rouleau de mesure (A, B),
- avec au moins un logement (2) formé dans le corps (1) du rouleau de mesure (A, B),
- avec un capteur de mesure (6), qui se trouve dans le logement (2),
- avec un recouvrement (7) se trouvant dans l'ouverture du logement (2), dont la surface supérieure est disposée essentiellement en concordance de surface avec la périphérie du corps (1) du rouleau de mesure (A, B),
**caractérisé en ce qu'**un élément de transfert de force (5) fixé dans le logement (2), qui présente un talon de charge (5b) agissant sur le capteur de mesure (6), dont la surface transversale est inférieure à la surface transversale du logement (2), où l'élément de transfert de force est relié au recouvrement par une connexion serrée.

2. Dispositif selon la revendication 1, **caractérisé en ce que** le corps du rouleau de mesure est entouré d'une enveloppe (9), qui couvre complètement le recouvrement (7).

3. Dispositif selon l'une quelconque des revendications précédentes, **caractérisé en ce que** le recouvrement (7) est fixé dans l'ouverture du logement (2).

4. Dispositif selon l'une quelconque des revendications précédentes, **caractérisé en ce que** l'élément de transfert de force (5) présente sur la face de la face extérieure du rouleau de mesure (A, B), une creusure (5d), dans laquelle un talon (7a) formé sur la surface de l'élément de transfert de force (5) est pressé.

5. Dispositif selon l'une quelconque des revendications précédentes, **caractérisé en ce que** le recouvrement (7) est pressé dans l'ouverture du logement (2) et rend celle-ci complètement étanche.

6. Dispositif selon l'une quelconque des revendications 1 à 3, **caractérisé en ce qu'**un intervalle restant entre le bord du recouvrement (7) et l'ouverture du logement (2) est rendu étanche avec une masse d'étanchéification (8).

7. Dispositif selon l'une quelconque des revendications précédentes, **caractérisé en ce que** le recouvrement (7) s'appuie sur la surface orientée vers celui-ci de l'élément de transfert de force (5).

8. Dispositif selon l'une quelconque des revendications 1 à 6, **caractérisé en ce qu'**entre le recouvrement (7) et l'élément de transfert de force (5), est formé un talon-support, qui possède une surface transversale plus petite que le talon de charge (5b) de l'élément de transfert de force (5).

9. Dispositif selon l'une quelconque des revendications précédentes, **caractérisé en ce que** l'élément de transfert de force (5) est relié fixement, par son extrémité, au rouleau de mesure (A, B) et présente sur son autre extrémité, un talon de charge (5b).

10. Dispositif selon l'une quelconque des revendications précédentes, **caractérisé en ce que** le capteur de mesure (6) est de forme annulaire.

11. Dispositif selon l'une quelconque des revendications précédentes, **caractérisé en ce que** l'élément de transfert de force (5) présente un segment en tige (5a), dont une extrémité est solidement reliée au rouleau de mesure (A).

12. Dispositif selon la revendication 11, **caractérisé en ce que** le talon de charge (5b) est formé comme un collet entourant le segment en tige (5a).

13. Dispositif selon l'une quelconque des revendications 10 à 12, **caractérisé en ce que** le capteur de mesure (6) et l'élément de transfert de force (5) sont disposés de manière coaxiale et **en ce que** le talon de charge (5b) agit sur le capteur de mesure (6) par sa face inférieure opposée à la face extérieure du rouleau de mesure (A, B).

14. Dispositif selon l'une quelconque des revendications précédentes, **caractérisé en ce que** la liaison solide entre l'élément de transfert de force (5) et le rouleau de mesure (A, B) est formée par une liaison à vis.

15. Dispositif selon l'une quelconque des revendications précédentes, **caractérisé en ce que** l'élément de transfert de force (5) présente au moins un segment (5b), qui consiste en un autre matériau que le segment de tige (5a) s'y engrenant.

16. Dispositif selon l'une quelconque des revendications précédentes, **caractérisé en ce que** le recouvrement (7) consiste en un matériau dont les propriétés sont différentes du matériau sur lequel la tige de l'élément de transfert de force (5) est fixée.

17. Dispositif selon l'une quelconque des revendications précédentes, **caractérisé en ce que** le logement (2) possède une section circulaire.
